# EUROPEAN PATENT APPLICATION

(11) **EP 3 367 310 A1**
(43) Date of publication of application: **29.08.2018**
(21) Application number: 17158370.1
(22) Date of filing: 28.02.2017
(51) Int. Cl.: G06N 3/063, G06N 3/04

(54) **METHOD AND APPARATUS FOR PARALLELIZING LAYERS OF DEEP NEURAL NETWORKS ONTO PARALLEL COMPUTING SYSTEMS**

(71) Applicant: Fujitsu Limited, Kanagawa 211-8588 (JP)
(72) Inventor: ALDEA LOPEZ, Sergio, London, W13 9AS (GB); AL-JARRO, Ahmed, London, W1T 6PF (GB); BHASKARAN, Balakrishnan, Exeter, Devon EX4 9DR (GB)
(74) Representative: Haseltine Lake LLP

(57) **Abstract**

A computer-implemented method of creating a modified Deep Neural Network-DNN-comprises: carrying out a parallelization process to allocate computational and memory requirements of a selected layer or set of layers of the DNN across more than one computer process. The parallelization process comprises: selecting the number of computer processes to be used to execute the selected layer(s); determining if the selected number of computer processes is the same as the number of selected layers and, in dependence upon the result of the determination, assigning the selected layer(s) to the computer processes in accordance with a predetermined protocol; and modifying the DNN by: creating and adding to the DNN a first additional layer, to distribute input data from the selected layer(s) to the computer processes, and a second additional layer, to collate and combine output data from the computer processes; and setting connections between the first and second additional layers and the selected layer(s) in the DNN so as to arrange for parallel execution of the selected layer(s) by the computer processes.

## Description

Embodiments relate to a method and apparatus for parallelizing layers of deep neural networks onto parallel computing systems.

Computational units in an artificial neural network (ANN) are modelled after neurons in the human brain, the neurons in the ANN being grouped by layers. Typically there is an input layer of neurons, an output layer of neurons, and hidden layers of neurons, for example convolution, pooling, rectified linear units, fully connected layers, etc. A Deep Neural Network (DNN) is an ANN with multiple hidden layers of computational units between input and output layers. Each computational unit combines different inputs, which are weighted, to compute a function. This function could be a linear combination of the weighted inputs, or something more elaborate such as a sigmoid function. When training an ANN, the outputs of the network are compared with a desired output using a loss function and an error value is calculated for each neuron in the output layer. The error values are then back-propagated until each neuron in the network has an error value. These error values are used to calculate the gradients of the loss function with respect to the weights in the network, the gradients in turn being used to update the weights in order to minimise the loss function.

DNNs offer the potential to achieve significant advancements in speech and image recognition, with accuracy performance exceeding those recorded by other sophisticated methods in Machine Learning. However, the training process of DNNs is an extremely computationally intensive task, which typically requires large computational resources, including memory (RAM) and training (execution) time. To address the long training times, several efforts have focused on improvements to speed up deep learning algorithms while exploiting the computational power of both specialised and mainstream hardware accelerators, including, for example, GPUs, Intel^{®} Xeon Phi™, FPGA, ASICs, etc. To address the large memory requirements, several distribution schemes have been proposed with focus on using more than one accelerator. To this end, several parallelization schemes have been reported that deal with distributing the memory or computational requirements of DNNs as well as their hybridisation. For instance, when all data requirements for representing a DNN can be stored in the memory of one accelerator, a data-parallel approach is typically used for training DNNs on accelerators, which is applied at all layers of the neural network.

Effectively, in the data-parallel approach, the entire network's model (neurons, weights and gradients) is replicated and stored on all accelerators. All accelerators compute the gradients based on local input (training) data and a local copy of the weights. They then exchange gradient values, in a synchronous or asynchronous fashion, in order to update the weights across all accelerators. In this approach, only the input data is evenly distributed across the devices. While data-parallelism works well for relatively small DNN models, i.e. those that can be stored in the memory of one accelerator, one can easily conclude that this approach can impose a serious limitation on the size of DNNs that can be efficiently trained. To address the memory limitation imposed by data-parallelism, model-parallelism can be used, where across the model dimension of the DNN, different computer processes train different parts of the DNN model. This means that, whenever a model's part that is assigned and therefore being trained by one process requires access to data that belong on another part of the DNN model that is assigned and trained by another process, the two computer processes must communicate to exchange this data.

It is desirable to provide an improved parallelization scheme for use with DNNs.

According to an embodiment of a first aspect there is provided a computer-implemented method comprising: carrying out a parallelization process to allocate computational and memory requirements of a selected layer or set of layers of an existing DNN across more than one computer process, the parallelization process comprising: determining if the number of computer processes to be used to execute the selected layer(s) is the same as the number of selected layers and, in dependence upon the result of the determination, assigning the selected layer(s) to the computer processes in accordance with a predetermined protocol; and modifying the DNN by: creating and adding to the DNN a first additional layer, to distribute input data from the selected layer(s) to the computer processes, and a second additional layer, to collate and combine output data from the computer processes; and setting connections between the first and second additional layers and the selected layer(s) in the DNN so as to arrange for parallel execution of the selected layer(s) by the computer processes; the method further comprising: repeating the parallelization process for each and any other selected layer or set of layers until all selected layers have been processed; and setting up the computer processes, and respective memory portions associated with the computer processes, to execute the selected layer(s) in parallel.

In the context of the present application "computer process" means at least one of: a single computer processor; more than one computer processor in a single computing device; and more than one computer processor in more than one computing device.

Embodiments may provide an effective mechanism for distributing and parallelizing a certain layer or set of layers in DNNs. An existing DNN may be transformed into a parallel one by adding new additional layers that handle how the data are split, distributed, and later combined. These new layers may provide an automatic and customisable parallelization process. Embodiments may allow the parallelization of DNN layers in different ways, for example distributing only weights or distributing weights and input data and ensuring that the correct concurrent computation of the parallel layers is maintained. By performing the parallelization of DNN layers at a "per-layer" level, users may have full control over which parts of the entire network are to be distributed and parallelized. Effectively, this means that each level within a DNN can be independently parallelized to later resume a serial execution at the following level if required. As a result of this "per-layer" level transformation, the resulting parallel DNN may be adapted for use by different frameworks with negligible effort.

Embodiments may allow the user to customise how the layers are parallelized and distributed across different computer processes, for example it may allow for the assignment of multiple layers to the same computer process. This may make it possible to handle parallel layers of different computational load more efficiently, therefore making possible an even allocation of the computational workload. Moreover, in some embodiments not only the weights of an original layer, but also the input data to said layer, may be distributed. This feature makes possible the creation of different possible allocations, thus increasing potential memory savings. To this end, different computing devices can have the same or different memory resources to compute the different layers.

Embodiments may provide an effective model-parallelism mechanism for orchestrating the distribution of memory requirements in DNNs across multiple devices as well as parallelizing the computation of the newly supplied layers in an automated and transparent manner. Embodiments may address the potentially critical limitation that arises when the model size increases to the point that it cannot fit into the memory of a single accelerator and/or when increasing the batch size. Embodiments may be hardware independent, i.e. may exploit the computational power of both conventional CPUs as well as current and emerging hardware accelerators.

An existing DNN which undergoes a parallelization process of an embodiment may be an untrained DNN or a trained DNN. By distributing the execution of the model of an untrained DNN across different devices, execution time of the training process may be speeded up, although this will depend on the communication between them and the ratio of exploitation of each accelerator. It may also be possible to apply the same or a similar method to speed up already trained DNNs, since the underlying calculations would have been distributed.

Assigning the selected layer(s) to the computer processes may include allocating to each computer process at least a set of weights of at least one selected layer and at least part of the input data of at least one selected layer. The method may further comprise storing the set of weights and input data allocated to each computer process. The first additional layer may distribute the input data to each computer process in accordance with the allocation of input data to that computer process. When the allocation of input data to the computer processes is such that at least one computer process receives only part of the input data, the first additional layer may split the input data in accordance with the required allocation before distributing the input data and store distribution information indicating to which computer processes the input data were assigned. The second additional layer may combine the output data from the computer processes in accordance with the stored distribution information.

In an embodiment at least one of: the layers to undergo parallelization; the number of computer processes to be used; and grouping of the layers with respect to the computer processes; is user-selectable.

In an embodiment the predetermined protocol for assigning selected layer(s) to the concurrent computer processes may comprise: assigning one layer to each of the computer processes when the number of selected layers is the same as the number of computer processes; assigning more than one of the selected layers to at least one of the computer processes when the number of selected layers exceeds the number of computer processes; and dividing at least one of the selected layers into multiple sub-layers and assigning one layer or sub-layer to each of the computer processes when the number of the selected layers is less than the number of computer processes. An embodiment may further comprise, after assigning the selected layer(s) to the computer processes, storing information indicating how the layers were assigned to the computer processes.

In an embodiment, before the parallelization process is carried out on an untrained DNN, the untrained DNN may undergo a transformation process in which a selected layer of neurons of the untrained DNN, the selected layer comprising a set of neurons having a defined statistical profile, is removed from the DNN and replaced by N replacement layers of neurons, N being an integer greater than 1, each replacement layer comprising a different sub-set of the set of neurons of the selected layer such that the N replacement layers, and logical connections set between the N replacement layers and the remainder of the DNN, are in aggregate functionally equivalent within the DNN to the selected layer. In this case the method further comprises carrying out, after the parallelization process has been carried out, a weight initialization process to initialise the weights of the transformed and parallelized DNN, in which weight initialization process weights are generated locally and independently for each replacement layer such that each replacement layer is defined by the same statistical profile as the selected layer, whereby the N replacement layers are in aggregate statistically equivalent within the DNN to the selected layer.

The above-mentioned transformation process may also be used in respect of a trained DNN before parallelization, but in this case after parallelization the values of the weights of the already trained network would be used as they are.

According to an embodiment of a second aspect there is provided a computer-implemented method of creating a trained DNN, which method comprises training an untrained DNN created by the method of the first aspect. In an embodiment of the second aspect, the first additional layer may also collate and combine gradient data backward propagated through the DNN during training. The second additional layer may also distribute gradient data backward propagated through the DNN during training.

According to an embodiment of a third aspect there is provided a computer program which, when run on a computer, causes that computer to carry out a method of the first or second aspect.

According to an embodiment of a fourth aspect there is provided apparatus comprising: at least one parallelization processor to carry out a parallelization process to allocate computational and memory requirements of a selected layer or set of layers of the DNN across more than one computer process, the parallelization processor comprising: a computer process assigner to determine if the number of computer processes to be used to execute the selected layer(s) is the same as the number of selected layers and, in dependence upon the result of the determination, assign the selected layer(s) to the computer processes in accordance with a predetermined protocol; and a DNN modifier to modify the DNN, the DNN modifier comprising: a layer adder to create and add to the DNN a first additional layer, to distribute input data from the selected layer(s) to the computer processes, and a second additional layer, to collate and combine output data from the computer processes; and a connection setter to set connections between the first and second additional layers and the selected layer(s) in the DNN so as to arrange for parallel execution of the selected layer(s) by the computer processes; the parallelization processor repeating the parallelization process for each and any other selected layer or set of layers until all selected layers have been processed; the apparatus further comprising a set-up processor to set up the computer processes, and respective memory portions associated with the computer processes, to execute the selected layer(s) in parallel.

In an embodiment the computer process assigner may assign the selected layer(s) to the computer processes by allocating to each computer process at least a set of weights of at least one selected layer and at least part of the input data of at least one selected layer. Storage may be provided in the apparatus to store the set of weights and input data allocated to each computer process. The first additional layer created by the layer adder may distribute the input data to each computer process in accordance with the allocation of input data to that computer process. The allocation of input data to the computer processes may be such that at least one computer process receives only part of the input data, the first additional layer splitting the input data in accordance with the required allocation before distributing the input data. Distribution information indicating to which computer processes the input data were assigned may be stored. The layer adder may create a second additional layer which combines the output data from the computer processes in accordance with the stored distribution information.

In an embodiment of the apparatus at least one of: the layers to undergo parallelization; the number of computer processes to be used; and grouping of the layers with respect to the computer processes; is user-selectable.

In an embodiment of the apparatus the predetermined protocol for assigning selected layer(s) to the concurrent computer processes may comprise: assigning one layer to each of the computer processes when the number of selected layers is the same as the number of computer processes; assigning more than one of the selected layers to at least one of the computer processes when the number of selected layers exceeds the number of computer processes; and dividing at least one of the selected layers into multiple sub-layers and assigning one layer or sub-layer to each of the computer processes when the number of the selected layers is less than the number of computer processes.

Storage may be provided in the apparatus to store information indicating how the layers were assigned to the computer processes.

An embodiment may further comprise a transformer to carry out a transformation process on the existing DNN before the parallelization process is carried out, in which transformation process a selected layer of neurons of the existing DNN, the selected layer comprising a set of neurons having a defined statistical profile, is removed from the DNN and replaced by N replacement layers of neurons, N being an integer greater than 1, each replacement layer comprising a different sub-set of the set of neurons of the selected layer such that the N replacement layers, and logical connections set between the N replacement layers and the remainder of the DNN, are in aggregate functionally equivalent within the DNN to the selected layer. In this case the apparatus further comprises a weight initializer for carrying out, after the parallelization process has been carried out, a weight initialization process to initialise the weights of the transformed and parallelized DNN, in which weight initialization process weights are generated locally and independently for each replacement layer such that each replacement layer is defined by the same statistical profile as the selected layer, whereby the N replacement layers are in aggregate statistically equivalent within the DNN to the selected layer.

Apparatus embodying a fifth aspect may be used to create a trained DNN by training an untrained DNN created by the apparatus according to the fourth aspect. In such a case the first additional layer may also collate and combine gradient data backward propagated through the DNN during training. The second additional layer may also distribute gradient data backward propagated through the DNN during training.

Reference will now be made, by way of example, to the accompanying drawings, in which:
Figure 1 is a flowchart illustrating an overview of a DNN modification method according to an embodiment applied to the training of a DNN;
Figure 2 is a flowchart illustrating a modification of the method shown in Figure 1;
Figure 3A is a flowchart illustrating a parallelization process according to an embodiment;
Figure 3B is a schematic diagram of apparatus for carrying out an embodiment;
Figure 3C is a schematic diagram of modified apparatus for carrying out an embodiment;
Figures 4(a), 4(a1), 4(a2) and 4(b) are diagrams for use in explaining criteria for assigning selected layers to computer processes;
Figures 5(a), 5(b) and 5(c) are diagrams for use in explaining application of the parallelization process to four selected layers;
Figures 6(a), 6(b) and 6(c) are diagrams for use in explaining application of the parallelization process to a single selected layer;
Figure 7 is a flowchart illustrating a setting-up process;
Figure 8 is a flowchart illustrating a first distribution layer-forward propagation process;
Figure 9 is a flowchart illustrating a second distribution layer-forward propagation process;
Figure 10 is a flowchart illustrating a first distribution layer-backward propagation process;
Figure 11 is a flowchart illustrating a second distribution layer-backward propagation process;
Figure 12 is a flowchart illustrating a first collation-combination layer-forward propagation process;
Figure 13 is a flowchart illustrating a second collation-combination layer-forward propagation process;
Figure 14 is a flowchart illustrating a first collation-combination layer-backward propagation process;
Figure 15 is a flowchart illustrating a second collation-combination layer-backward propagation process;
Figure 16 is a diagram for use in explaining how a specific DNN may be parallelized; and
Figure 17 is a block diagram of a computing device suitable for carrying out a method of an embodiment.

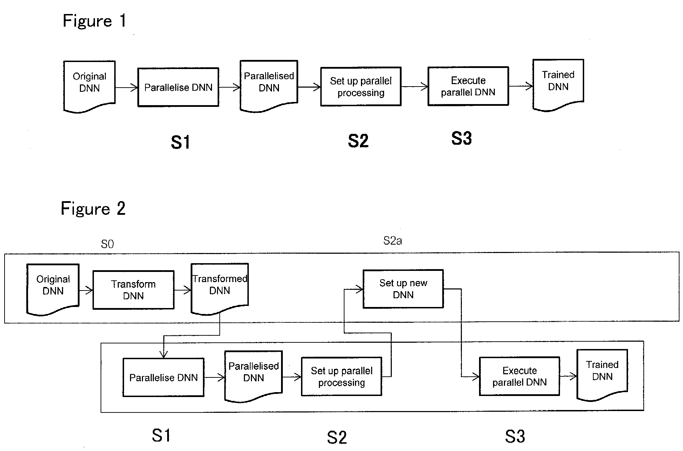

An application of an embodiment of the DNN modification method in the training of a DNN will now be explained. Figure 1 shows an overview of the embodiment in which at step S1 the original (i.e. a previously-constructed) DNN is transformed to create an equivalent network in which some new layers are added to enable the parallel execution of the network, at the points indicated by a user. The actual parallelization of the network will be explained in detail later on. In step S2 parallel processing is set up and in step S3 the parallelized DNN is executed. Since the parallelization process occurs at the network level, the parallelized network may easily be executed by different deep learning frameworks, such as, for example, TensorFlow™, Caffe™, Theano™, etc.

Figure 2 shows how the method outlined above with reference to Figure 1 might be used to parallelize a DNN which has already undergone an initial modification procedure as described below in order to distribute memory requirements. In the initial modification procedure a transformation process, indicated at step S0 of Figure 2, is carried out to transform an existing DNN before it undergoes the parallelization process. In the transformation process a selected layer of neurons of the existing DNN, the selected layer comprising a set of neurons having a defined statistical profile, is removed from the DNN and replaced by N replacement layers of neurons, N being an integer greater than 1. Each replacement layer comprises a different sub-set of the set of neurons of the selected layer such that the N replacement layers, and logical connections set between the N replacement layers and the remainder of the DNN, are in aggregate functionally equivalent within the DNN to the selected layer. The transformation process includes determining if the selected layer contains a bias unit and, if so, distributing weights corresponding to the bias unit of the selected layer across the N replacement layers. The DNN as transformed by the transformation process is then parallelized (step S1, as before) and then parallel processing of the parallelized DNN is then set up (step S2, as before). A weight initialization process, indicated at step S2a, is then carried out to initialise the weights of the parallelized DNN in order to set up the modified DNN. In the weight initialization process weights are generated locally and independently for each replacement layer such that each replacement layer is defined by the same statistical profile as the selected layer, whereby the N replacement layers are in aggregate statistically equivalent within the DNN to the selected layer.

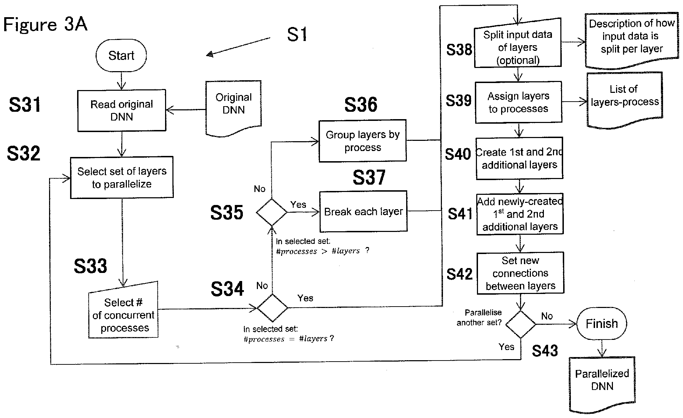

The parallelization process of step S1 of Figure 1 will now be described with reference to Figure 3A. This process starts by reading an original (i.e. existing untrained or trained) DNN (step S31) and allows a user the opportunity to select which layer or set of layers of the DNN are to be parallelized (step S32). The user is also prompted (step S33) on how many concurrent computer processes are to execute the selected layers when parallelized. At this point, a test is run (step S34) with the purpose of configuring the control flow of the parallel solution, which depends on both the number of layers selected and the number of concurrent computer processes.

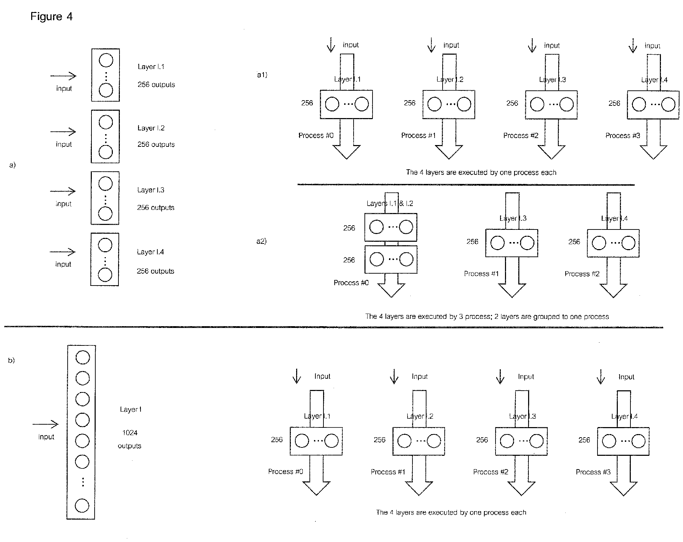

Figure 4 shows an example of a selected layer I (Figure 4(b)) or a set of selected layers I.1, 1.2, 1.3, I.4, (Figures 4(a), 4(a1) and 4(a2)) of the DNN to be executed by four processes, and different criteria for parallelizing them: in (a1) the four elements or selected layers are executed respectively by different computer processes #0, #1, #2, #3; in (a2) the four selected layers are executed by a smaller number of computer processes, in this case three computer processes #0, #1, #2, layers I.1 and I.2 both being assigned to process #0; and in (b) the sole selected layer 1 is broken (divided) into four sub-layers I.1, I.2, I.3, I.4 that are executed by the same number of computer processes #0, #1, #2, #3. If the number of computer processes is less than the number of selected layers (step S35 - No), the selected layers are grouped by computer processes (step S36), for example as illustrated in Figure 4(a2). If the number of computer processes is larger than the number of selected layers (step S35 - Yes), these layers have to be broken (step S37), as shown in Figure 4(b). The layers may be broken, for example, following the initial DNN modification procedure described above with reference to Figure 2. Finally, if the number of selected layers and computer processes are the same (step S34 - Yes), each selected layer is assigned to a different computer process, as shown in Figure 4(a1).

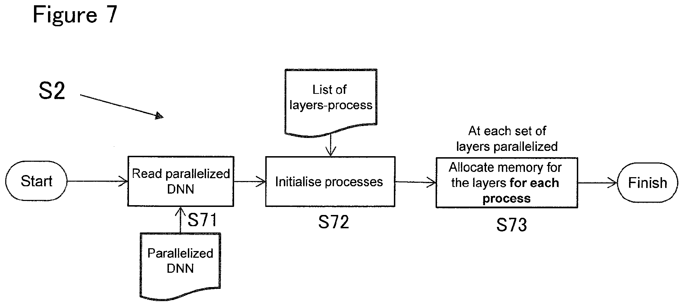

The layers are assigned to computer processes (step S39) according to the result of the test, and a list of which layers are assigned to each process (the ID of each process at this stage does not have to correspond with the ID of the computer processes as created at execution time) is created. This list is used later during the setting up of the parallel processing of the DNN, as seen in Figure 7 (described below).

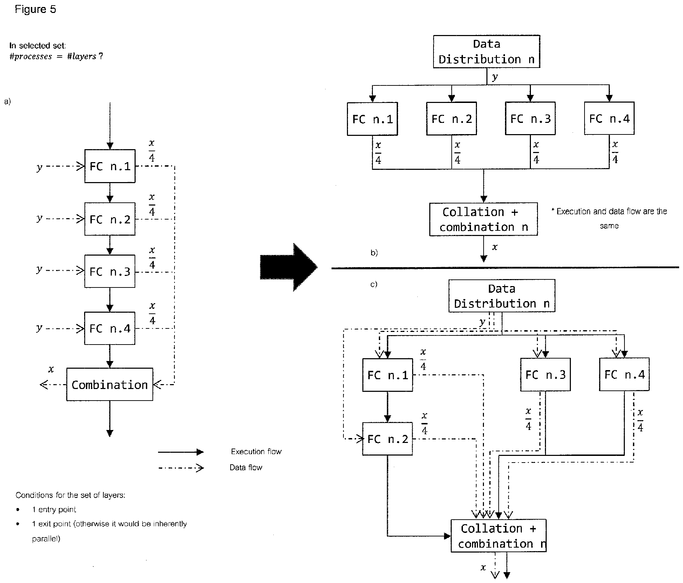

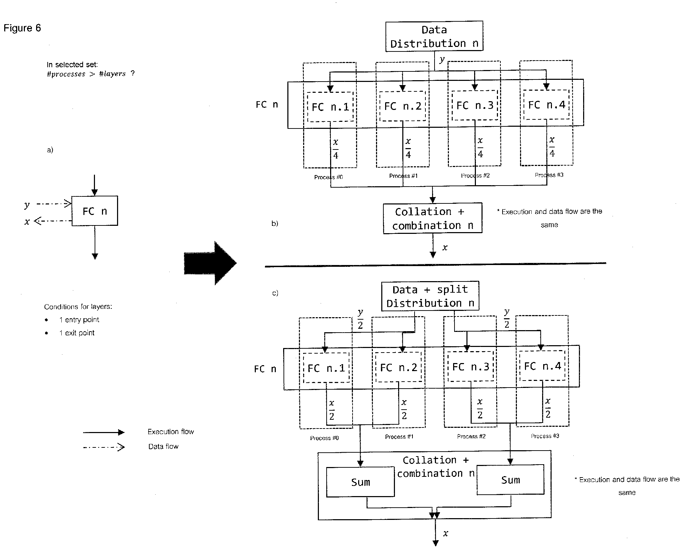

As will be explained in more detail later with reference to Figures 5 and 6, in step S40 a new first additional layer (hereafter referred to as a distribution layer), for distributing the input data of the selected layer(s) to the computer processes, and a new second additional layer (hereafter referred to as a collation layer, or a collation and combination layer), for collating and combining output data from the computer processes after execution of the selected layer(s), are created. These new layers are added to the DNN in step S41, before the parallelized version of the DNN is created in step S42. In the case that the user decides to parallelize a further set of layers (step S43 - Yes), the above-described parallelization process starts again at step S32.

The process of Figure 3A also includes an optional step (step S38), which involves the user deciding to split the input data for the parallelized layers between the computer processes (as depicted in Figure 6(c) for example, as described below). In this case, the control flow will be exactly as described before, however, with the difference that the new distribution layers added to distribute the input data across the new parallelized layers are slightly different. These differences in the process flow of these layers, which are described below, ensure that the data are split as required prior to their allocation to the parallelized layers (sometimes called "distributed layers" hereafter).

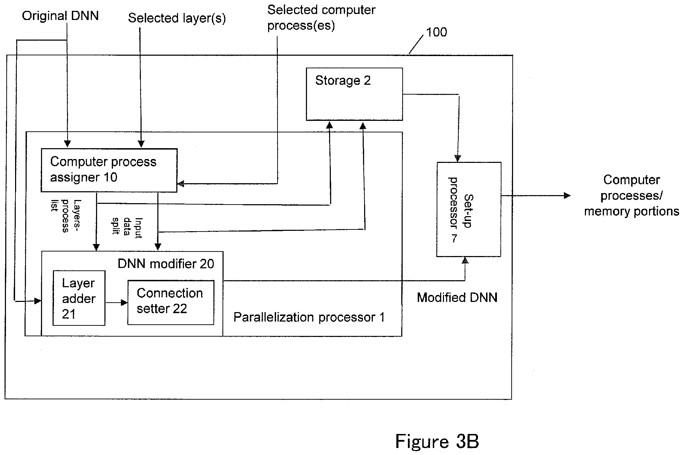

Apparatus 100 for implementing an embodiment is shown in Figure 3B. Apparatus 100 comprises a parallelization processor 1, storage 2, and set-up processor 7. The parallelization processor 1 is configured to carry out a parallelization process to allocate computational and memory requirements of a selected layer or set of layers of the DNN across more than one computer process and comprises a computer process assigner 10 and a DNN modifier 20 which are configured to carry out the parallelization process. The computer process assigner 10 is configured to determine if the number of computer processes to be used is the same as the number of selected layers and, in dependence upon the result of the determination, assign the selected layer(s) to the computer processes in accordance with a predetermined protocol. The DNN modifier 20 is configured to modify the DNN, and comprises a layer adder 21 and a connection setter 22. The layer adder 21 is configured to create and add to the DNN a first additional layer, for distributing input data from the selected layer(s) to the computer processes, and a second additional layer, for collating and combining output data from the computer processes. The connection setter 22 is configured to set connections between the first and second additional layers and the selected layer(s) in the DNN so as to arrange for parallel execution of the selected layer(s) by the computer processes. The parallelization processor 1 is operable to repeat the parallelization process for each and any other selected layer or set of layers until all selected layers have been processed, and then to output the modified DNN. Storage 2 is used to store lists of which layers are assigned to which processes and/or a description of how input data is split between the parallelized layers. Set-up processor 7 is configured to set up the computer processes, and respective memory portions associated with the computer processes, to execute the selected layer(s) in parallel. The operation of set-up processor 7 is described below with reference to Figure 7.

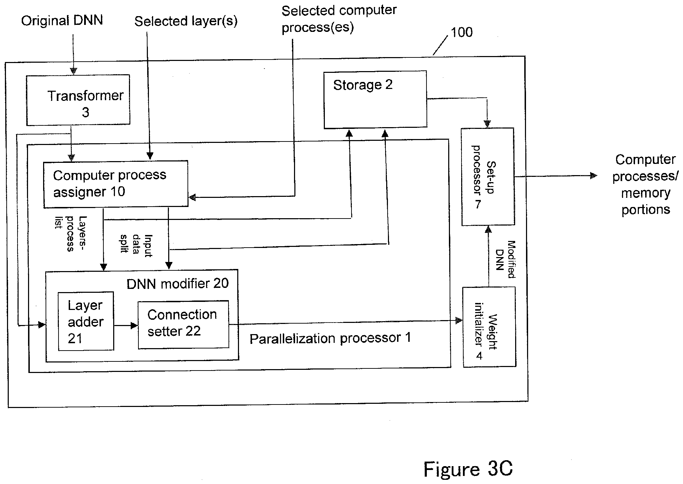

Optionally, as shown in Figure 3C, the apparatus of Figure 3B may be modified soas to also comprise a transformer 3 and a weight initializer 4 to carry out respectively steps S0 and S2a of Figure 2. Transformer 3 is configured to carry out a transformation process on the original DNN before the parallelization process is carried out. In the transformation process a selected layer of neurons of the existing DNN, the selected layer comprising a set of neurons having a defined statistical profile, is removed from the DNN and replaced by N replacement layers of neurons, N being an integer greater than 1, each replacement layer comprising a different sub-set of the set of neurons of the selected layer such that the N replacement layers, and logical connections set between the N replacement layers and the remainder of the DNN, are in aggregate functionally equivalent within the DNN to the selected layer. Weight initializer 3 is configured to carry out, after the parallelization process has been carried out, a weight initialization process to initialise the weights of the transformed and parallelized DNN, in which weight initialization process weights are generated locally and independently for each replacement layer such that each replacement layer is defined by the same statistical profile as the selected layer, whereby the N replacement layers are in aggregate statistically equivalent within the DNN to the selected layer.

In Figures 5 and 6 described below execution flow is represented by solid arrows, whilst data flow is represented by dotted arrows.

Figure 5 illustrates an example of a parallelization process of a set of layers FC n.1, FC n.2, FC n.3 and FC n.4 that are processed sequentially, and a combination layer, with only one entry point, only one exit point, input data y and combined output data x (which could be taken, for example, from the output of step S0 of Figure 2]. As illustrated in Figure 5 the selected set of layers (shown in Figure 5(a)) is parallelized and the connectivity of the transformed network is re-wired to accommodate for the now parallel requirements, either as shown in Figure 5(b) or in Figure 5(c). As shown in Figure 5(b) the set of layers is parallelized to be executed by as many concurrent computer processes as there are layers in the set (the scenario of Figure 4(a1)). Alternatively, as shown in Figure 5(c), less computer processes than layers are selected (the scenario of Figure 4(a2)). In each case a distribution layer for distributing the input data of the selected layers to the parallelized layers is added to the DNN at a stage before the parallelized layers, and a collation and combination layer for collating and combining the output data of each parallelized layers is added to the DNN after the parallelized layers.

Figure 6 illustrates a parallelization process of a sole layer FC n with input data y and output data x, shown in Figure 6(a), into four new sub-layers FC n.1, FC n.2, FC n.3 and FC n.4. In the arrangement shown in Figure 6(b), only the weights are distributed across the new sub-layers, and processing of the new sub-layers is parallelized. In Figure 6(c) both the weights and the input data are distributed across the new sub-layers. In this example the input data y is split evenly between two pairs of sub-layers.

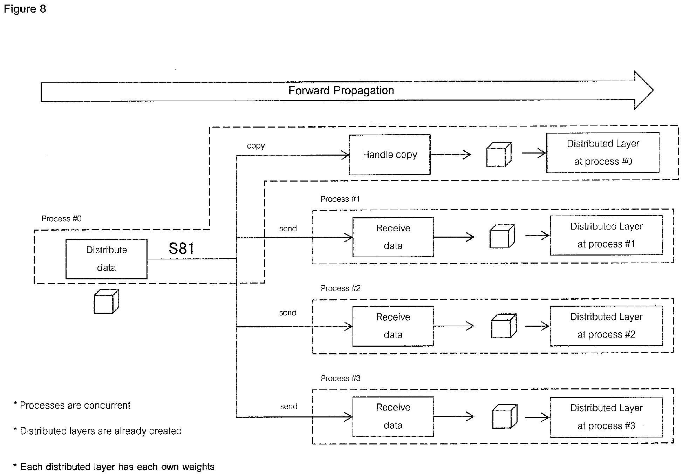

The processes followed by the new distribution layer and the new collation and combination layer shown in Figures 5 and 6 are described later with reference to Figures 8 to 15. Note that the distribution layer created to distribute the data across the new sub-layers is different in the case of Figure 6(c) from that of Figure 6(b), as the input data need to be split before distribution.

Once the parallelized DNN has been generated, and before is it ready to be executed in parallel - which includes the execution of the distribution and collation layers described later with reference to Figures 8 to 15 - a setting-up process is required (step S2 of Figure 1), as illustrated in Figure 7, which shows a process flow corresponding to the set-up process of the parallelized DNN. In step S71 of Figure 7 the parallelized DNN is read and then, taking the list of associations between parallelized layers and computer processes generated at the previous stage, the correct number of computer processes is initialised in step S72. Thereafter, in step S73, enough memory for the layers is allocated for each computer process. Finally, the parallelized DNN is ready to be computed.

In each of Figures 8 to 15 the tasks of the distribution layer and the collation and combination layer are carried out by process #0, but this is not essential.

Figure 8 illustrates the distribution layer-forward propagation process which may be followed by the distribution layer in forward propagation when only the weights are split across the parallelized layers, but the input data is not, as in Figures 5(b) and (c) and Figure 6(b). At step S81 the same copy of the data is sent/copied to each of the processes #0 to #3 for computation at the respective parallelized layers. Since the parallelized layers are separately created and initialised, they already hold their own weights.

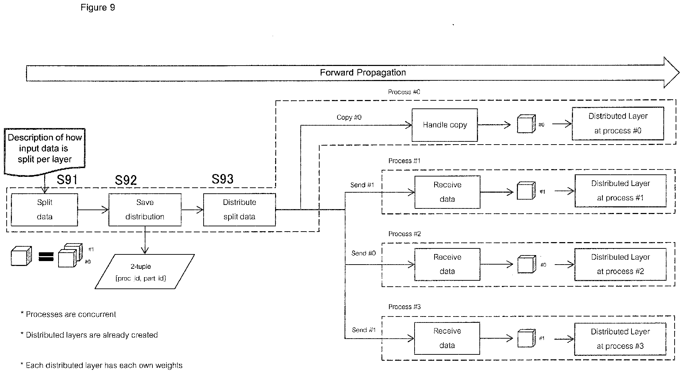

Figure 9 illustrates a distribution layer-forward propagation process which may be followed by the distribution layer in forward propagation when both the weights and the data are split across the parallelized layers, as in Figure 6(c). Each parallelized sub-layer receives a different sub-set of the input data. The process of splitting the input data begins at step S91 by checking the description of how the input data is to be split per layer (as a result of the process described in Figure 3). In step S92 where a piece of data is going to be sent is saved as a 2-tuple of the ID of the process and the ID of the piece. This 2-tuple list is different to the list of layers-computer processes seen in Figure 3, since the process of the distribution layer is performed at execution time, when the IDs for the computer processes are created. By way of example only, using MPI, communication groups could be used for this. At step S93 the data is sent/copied to the computer processes #0 to #3 in accordance with the required split.

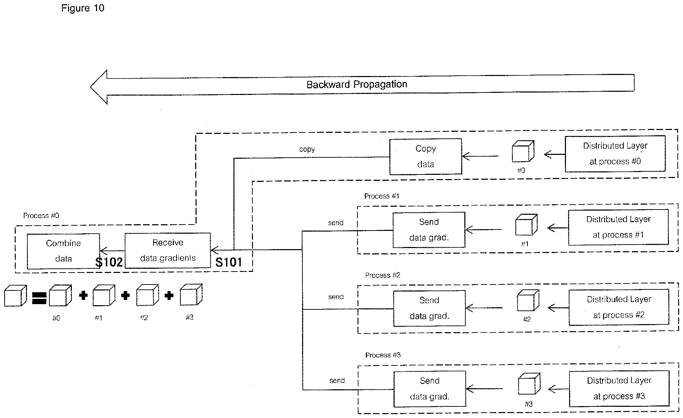

Figure 10 illustrates a distribution layer-backward propagation process which may be followed by the distribution layer in backward propagation when only the weights are split across the parallelized layers, but the data is not, as in Figures 5(b) and (c) and Figure 6(b). Each parallelized layer holds a data gradient corresponding to the parallelized layer. These data gradients are received by the distribution layer (step S101) and then added together (S102) to make the resulting data gradient of the original unparallelized layer.

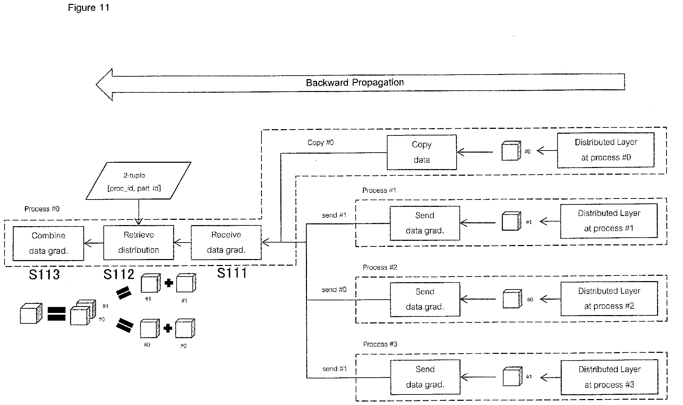

Figure 11 illustrates a distribution layer-backward propagation process which may be followed by the distribution layer in backward propagation when both the weights and the data are split across the parallelized layers, as in Figure 6(c). Each parallelized layer contains a different sub-set of the data gradients of this layer. Therefore, the scenario is similar to the one described later with reference to Figure 18. After receipt of the data gradients (step S111) the distribution layer determines how the gradients should be combined by retrieving the distribution of parts and computer processes generated by the distribution layer in the forward propagation (step S112), as seen in Figure 9, and then combines the parts (step S113), generating an output equivalent to that which would have been obtained had the layer been executed as originally described in the DNN description.

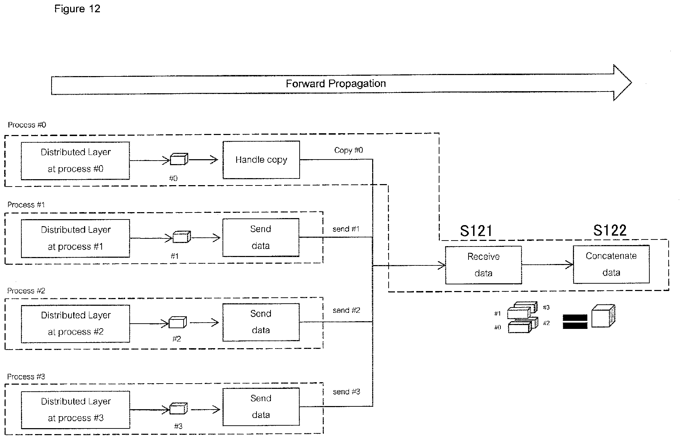

Figure 12 illustrates collation-combination layer-forward propagation process which may be followed by the collation-combination layer in forward propagation when only the weights are split across the sub-layers, but the data is not, as in Figures 5(b) and (c) and Figure 6(b). Each parallelized layer has calculated a part of the output data corresponding to the original layer, and therefore, once these output data parts are received (step S121), they are combined (step S122). Since there was no distribution of the input data, the combination is performed by a simple concatenation of the output data.

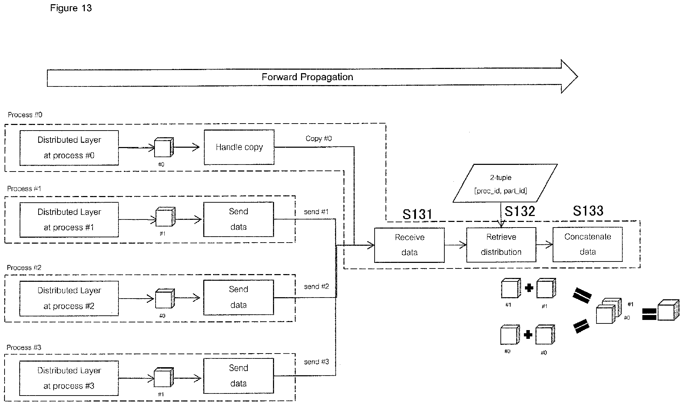

Figure 13 illustrates a collation-combination layer-forward propagation process which may be followed in forward propagation by the collation-combination layer when both the weights and the data are split across the sub-layers, as in Figure 6(c). Each sub-layer received a different sub-set of the input data, and therefore, in order to proceed with the combination of the output data once the output data are received (step S131), it is necessary to retrieve how this distribution was made (step S132). The combination is then done (S133) to generate an output equivalent to the one which would have been generated by the original layer if executed without distribution and parallelization.

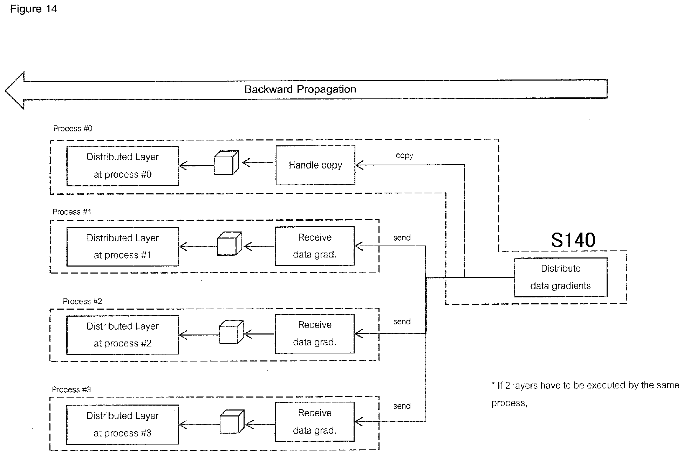

Figure 14 illustrates a collation-combination layer- backward propagation process which may be followed by the collation-combination layer in backward propagation when only the weights are split across the sub-layers, but the data is not, as in Figures 5(b) and (c) and Figure 6(b). The collation-combination layer received the same copy of the data gradients from each of the parallelized layers, and therefore, in step S140, the data gradients are simply redistributed to the parallelized layers.

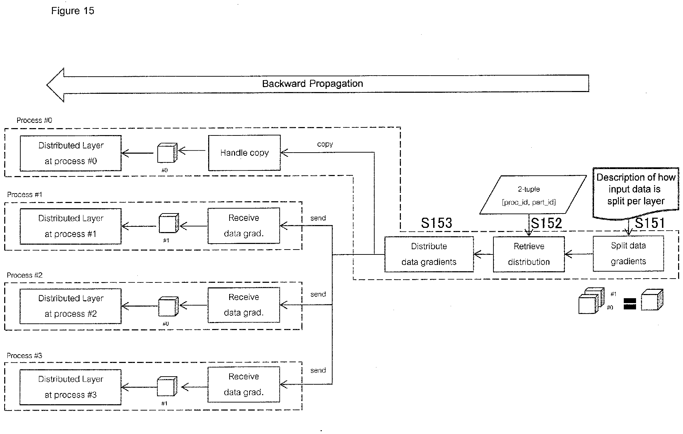

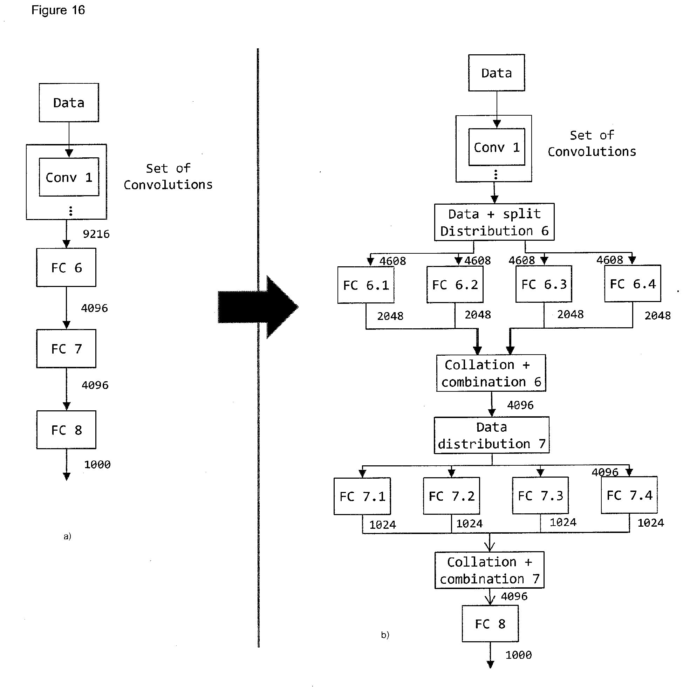

Figure 15 illustrates a collation-combination layer-backward propagation process which may be followed by the collation-combination layer in backward propagation when both the weights and the data are split across the sub-layers, as in Figure 6(c). Since the input data was split at forward propagation, each sub-layer now has to receive its corresponding part of the data gradients. This operation is satisfied by splitting the data gradients according to how the input data of the original layer was split (step S151), and using the information from the stored 2-tuple list (step S152) to distribute the data gradients to the corresponding computer processes (S153) appropriately.
In order to help the understanding of the required operations at the forward and backward propagation steps, by the distribution and collation layers, Figures 16 to 18 depict the operations involved when the weights are distributed in four parts and the input data in two.

As an example of how an embodiment of the present invention may be applied, Figure 16 shows how a specific DNN, AlexNet (https://papers.nips.cc/paper/4824-imagenet-classification-with-deep-convolutional-neural-networks.pdf), may be parallelized. In Figure 16 the original AlexNet network is shown at (a), and the resulting network after the parallelization is shown at (b), in which layers FC6 and FC7 have been distributed and parallelized.

In this case, the layer named FC6, which originally has 4096 outputs, is transformed into four smaller new parallel layers, i.e. the original layer is transformed into four elements (sub-layers) for parallel execution, each having 2048 outputs. For layer FC6, not only the weights are distributed, but also the input data, where the original 9216 inputs are here distributed in pairs of 4608 inputs each.

The weights of the original FC6 layer are effectively distributed into four smaller parallel elements (sub-layers), whose outputs are thereafter combined to create an output equivalent to that of the original layer. In this way, the possibility of training the network by accelerators is enabled, particularly when considering devices in which the memory resources are very limited, or accelerators that cannot store the whole network. Moreover, since the solution proposed by this invention is parallel in its nature, the computation of the distributed layers is performed in parallel. This ensures the efficiency of the solution and scalability of the parallelized networks when adopted as a standalone solution or when combined with other parallelization techniques, for example data parallelism. Additionally, the distribution of the input data, and not only the weights, ensures a further reduction in the memory requirements for the computation and training of the DNN.

In Figure 16, layer FC7 has only its weights distributed, and hence the first additional layer (data distribution 7) added follows the processes described with reference to Figure 8 (at the forward propagation stage) and Figure 10 (at the backward propagation stage), while the second additional layer (collation and combination 7) added follows the processes described with reference to Figure 12 (at the forward propagation stage) and Figure 14 (at the backward propagation stage). In this way, the combination of the output resulting from the sub-layers requires less operations, although the amount of memory distributed across the different processes is actually lower.

Embodiments may be applied, for example, in the fields of Higher Performance Computing (HPC), software, deep learning (DL) and artificial intelligence (AI). This method provides a reliable and cost effective mechanism both for distributing memory requirements of DNNs and for parallelizing the computation required for certain DNN layers. This way, the computation performed is more efficient. For example, if a certain set of DNN layers are originally computed in a sequential way, as shown in Figure 5, the present invention allows for their parallel computation, reducing significantly the time required for its execution. On the other hand, if the present invention is applied to only one layer, since its memory requirements can be distributed and its computation done concurrently, the layer may be computed faster, requiring less memory as it is split across different devices.

Additionally, an embodiment of the present invention may also enable a user to tackle AI problems/tasks otherwise not possible to address due to the large memory requirement of the DNNs. As a result, bigger problems/tasks can be addressed, allowing current AI developments to go beyond the current state-of-the-art.

As the computation of the distributed layers is performed in parallel, and therefore the solution is more efficient, an embodiment of the present invention may enable a further scalability of the current DNNs' frameworks that only apply data parallelism. While data parallelism allows the processing of more samples at the same time, the present invention, in combination with data parallelism, could make room for larger networks, larger samples (for example high resolution images), and a wider range of classes that a DNN can identify.

Additionally an embodiment may allow the user to customise how the layers would be parallelized and allocated across different computer processes, especially allowing for the assignment of multiple layers to the same process. This makes it possible to handle parallel layers having different computational loads more efficiently, and therefore making possible a distribution of workload.

Moreover, since not only the weights of an original layer can be distributed, but also the input data to that layer, different allocation schemes are possible, thereby increasing the potential benefits of the invention in terms of memory savings. Each device would require less memory to compute the different layers and therefore devices of different memory resources can be used to hold even or uneven allocations.

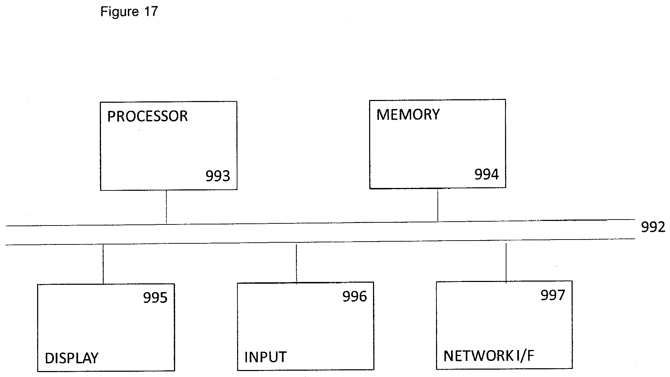

Figure 17 is a block diagram of a computing device, such as a data storage server, which may be used to implement some or all of the steps of a method of an embodiment, and perform some or all of the tasks of apparatus of an embodiment. For example, the computing device of Figure 17 may be used to implement all, or only some, of steps S31 to S43 of the method illustrated in Figure 3A, and to perform some or all of the tasks of the computer process assigner 10, layer adder 21, connection setter 22, storage 2, transformer 3, weight initializer 4 and set-up processor of the apparatus shown in Figure 3C.

The computing device comprises a processor 993, and memory, 994. Optionally, the computing device also includes a network interface 997 for communication with other such computing devices, for example with other computing devices of invention embodiments.

For example, an embodiment may be composed of a network of such computing devices. Optionally, the computing device also includes one or more input mechanisms such as keyboard and mouse 996, and a display unit such as one or more monitors 995. The components are connectable to one another via a bus 992.

The memory 994, which may serve as storage 2, may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement some or all of the methods described with reference to Figures 1, 2, 3A, 7, 8, 9, 10, 11, 12, 13, 14 and/or 15 and defined in the claims. For example, processor 993 may execute computer program code to implement each of steps S1 to S3 of Figures 1 and 2, or only step S1 of Figures 1 and 2 in whole or in part, or only steps S2 and S3 of Figures 1 and 2, or each of steps S0 to S3 of Figure 2, or only step S0 of Figure 2, or only step S2a of Figure 2.

The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 995 may display a representation of data stored by the computing device and may also display a cursor and dialog boxes and screens enabling interaction between a user and the programs and data stored on the computing device. The input mechanisms 996 may enable a user to input data and instructions to the computing device.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device such as that illustrated in Figure 17. Such a computing device need not have every component illustrated in Figure 17, and may be composed of a subset of those components. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

Embodiments may be implemented in hardware, or as software modules running on one or more processors, or on a combination thereof. That is, those skilled in the art will appreciate that a microprocessor or digital signal processor (DSP) may be used in practice to implement some or all of the functionality described above.

The invention may also be embodied as one or more device or apparatus programs (e.g. computer programs and computer program products) for carrying out part or all of the methods described herein. Such programs embodying the present invention may be stored on computer-readable media, or could, for example, be in the form of one or more signals. Such signals may be data signals downloadable from an Internet website, or provided on a carrier signal, or in any other form.

The above-described embodiments of the present invention may advantageously be used independently of any other of the embodiments or in any feasible combination with one or more others of the embodiments.

## Claims

1. A computer-implemented method comprising:
carrying out a parallelization process to allocate computational and memory requirements of a selected layer or set of layers of an existing Deep Neural Network - DNN - across more than one computer process, the parallelization process comprising:
determining if the number of computer processes to be used to execute the selected layer(s) is the same as the number of selected layers and, in dependence upon the result of the determination, assigning the selected layer(s) to the computer processes in accordance with a predetermined protocol; and
modifying the DNN by:
creating and adding to the DNN a first additional layer, to distribute input data from the selected layer(s) to the computer processes, and a second additional layer, to collate and combine output data from the computer processes; and
setting connections between the first and second additional layers and the selected layer(s) in the DNN so as to arrange for parallel execution of the selected layer(s) by the computer processes;
the method further comprising:
repeating the parallelization process for each and any other selected layer or set of layers until all selected layers have been processed; and
setting up the computer processes, and respective memory portions associated with the computer processes, to execute the selected layer(s) in parallel.

2. A method as claimed in claim 1, wherein assigning the selected layer(s) to the computer processes includes allocating to each computer process at least a set of weights of at least one selected layer and at least part of the input data of at least one selected layer.

3. A method as claimed in claim 2, further comprising storing the set of weights and input data allocated to each computer process.

4. A method as claimed in claim 2 or 3, wherein the first additional layer distributes the input data to each computer process in accordance with the allocation of input data to that computer process.

5. A method as claimed in claim 4, wherein, when the allocation of input data to the computer processes is such that at least one computer process receives only part of the input data, the first additional layer splits the input data in accordance with the required allocation before distributing the input data and stores distribution information indicating to which computer processes the input data were assigned.

6. A method as claimed in claim 5, wherein the second additional layer combines the output data from the computer processes in accordance with the stored distribution information.

7. A method as claimed in any preceding claim, wherein at least one of:
the layers to undergo parallelization;
the number of computer processes to be used; and
grouping of the layers with respect to the computer processes;
is user-selectable.

8. A method as claimed in any preceding claim, wherein the predetermined protocol for assigning selected layer(s) to the concurrent computer processes comprises:
assigning one layer to each of the computer processes when the number of selected layers is the same as the number of computer processes;
assigning more than one of the selected layers to at least one of the computer processes when the number of selected layers exceeds the number of computer processes; and
dividing at least one of the selected layers into multiple sub-layers and assigning one layer or sub-layer to each of the computer processes when the number of the selected layers is less than the number of computer processes.

9. A method as claimed in any preceding claim, further comprising, after assigning the selected layer(s) to the computer processes, storing information indicating how the layers were assigned to the computer processes.

10. A method as claimed in any preceding claim, further comprising:
before the parallelization process is carried out on an untrained DNN, transforming the untrained DNN by removing from the DNN a selected layer of neurons of the untrained DNN, the selected layer comprising a set of neurons having a defined statistical profile, and replacing the selected layer by N replacement layers of neurons, N being an integer greater than 1, each replacement layer comprising a different sub-set of the set of neurons of the selected layer such that the N replacement layers, and logical connections set between the N replacement layers and the remainder of the DNN, are in aggregate functionally equivalent within the DNN to the selected layer;
the method further comprising, after the parallelization process has been carried out, initializing the weights of the transformed and parallelized DNN by generating weights locally and independently for each replacement layer such that each replacement layer is defined by the same statistical profile as the selected layer.

11. A computer-implemented method of creating a trained DNN, which method comprises:
training an untrained DNN created by the method of any preceding claim.

12. A method as claimed in claim 11, wherein the first additional layer also collates and combines gradient data backward propagated through the DNN during training.

13. A method as claimed in claim 12 or 13, wherein the second additional layer also distributes gradient data backward propagated through the DNN during training.

14. A computer program which, when run on a computer, causes that computer to carry out the method of any preceding claim.

15. Apparatus comprising:
at least one parallelization processor to carry out a parallelization process to allocate computational and memory requirements of a selected layer or set of layers of an existing Deep Neural Network - DNN - across more than one computer process, the parallelization processor comprising:
a computer process assigner to determine if the number of computer processes to be used to execute the selected layer(s) is the same as the number of selected layers and, in dependence upon the result of the determination, assign the selected layer(s) to the computer processes in accordance with a predetermined protocol; and
a DNN modifier to modify the DNN, the DNN modifier comprising:
a layer adder to create and add to the DNN a first additional layer, to distribute input data from the selected layer(s) to the computer processes, and a second additional layer, to collate and combine output data from the computer processes; and
a connection setter to set connections between the first and second additional layers and the selected layer(s) in the DNN so as to arrange for parallel execution of the selected layer(s) by the computer processes;
the parallelization processor repeating the parallelization process for each and any other selected layer or set of layers until all selected layers have been processed;
the apparatus further comprising a set-up processor to set up the computer processes, and respective memory portions associated with the computer processes, to execute the selected layer(s) in parallel.
